# EUROPEAN PATENT APPLICATION

(11) **EP 4 631 830 A1**
(43) Date of publication of application: **15.10.2025**
(21) Application number: 25160670.3
(22) Date of filing: 27.02.2025
(51) Int. Cl.: B62D 25/02, B62D 25/04, B62D 25/20, B62D 27/02, B62D 27/06

(54) **VEHICLE SIDE PORTION STRUCTURE**

(30) Priority: 09.04.2024 JP 2024062916
(71) Applicant: TOYOTA JIDOSHA KABUSHIKI KAISHA, Toyota-shi, Aichi-ken, 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

A vehicle side portion structure has: a pillar 32 extending in a vehicle vertical direction at a vehicle side portion 10; a rocker 34 extending in a vehicle longitudinal direction at a lower side of the pillar 32 and connected to the pillar 32, and structured to include a main body portion 56 and an extending portion 58 that extends toward a vehicle transverse direction inner side from an upper portion of the main body portion 56; and a frame member 28 disposed at a vehicle transverse direction inner side of the main body portion 56 and a vehicle lower side of the extending portion 58.

## Description

### BACKGROUND

### Technical Field

The present invention relates to a vehicle side portion structure.

### Related Art

Japanese Patent Application Laid-Open (JP-A) No. H07-117726 discloses a vehicle body floor structure in which a battery frame is joined to a floor member disposed at the lower surface of a floor case, a battery is mounted to the battery frame, and the battery is housed between the floor case and the battery frame.

In this technique, side sills (rockers) are disposed at the outer sides of side members that extend in the vehicle longitudinal direction at the floor member. Pillars stand erect at the side sills (the rockers).

The side members and the regions, which are in vicinities of the portions joined to the pillars, of the side sills (the rockers) are connected in the vehicle transverse direction by outriggers. In order to absorb collision energy at the time of a side collision of the vehicle, the outrigger is crushingly deformed smoothly at the time when the pillar collapses-in toward the vehicle transverse direction inner side.

However, in the above-described technique, there is room for improvement in suppressing collapsing-in of the pillar toward the vehicle transverse direction inner side and protecting the vehicle cabin, at the time of a side collision of the vehicle.

### SUMMARY

In view of the above-described circumstances, an object of the present disclosure is to provide a vehicle side portion structure that, at the time of a side collision of a vehicle, can suppress collapsing-in of a pillar toward the vehicle transverse direction inner side and protect the vehicle cabin.

A vehicle side portion structure relating to a first aspect includes: a pillar extending in a vehicle vertical direction at a vehicle side portion; a rocker extending in a vehicle longitudinal direction at a lower side of the pillar and connected to the pillar, and structured to include a main body portion and an extending portion that extends toward a vehicle transverse direction inner side from an upper portion of the main body portion; and a frame member disposed at a vehicle transverse direction inner side of the main body portion and a vehicle lower side of the extending portion.

In accordance with the vehicle side portion structure relating to the first aspect, at the time of a side collision of the vehicle (hereinafter called "at the time of a side collision"), load is inputted to the pillar at the vehicle upper side of the rocker. At this time, a moment in the direction of collapsing in toward the vehicle transverse direction inner side with the vehicle longitudinal direction being the axial direction thereof, is generated at the rocker that is connected to the pillar. Here, the frame member is disposed at the vehicle lower side of the extending portion of the rocker. Accordingly, due to the extending portion receiving upwardly-directed reaction force from the frame member, collapsing-in of the rocker toward the vehicle transverse direction inner side is suppressed.

Further, the rocker has the main body portion and the extending portion, and is disposed so as to span from the vehicle upper side to the vehicle transverse direction outer side of the frame member. Owing to this arrangement, the rotational axis of the moment generated at the rocker at the time of a side collision of the vehicle is positioned further toward the vehicle lower side than in a case in which the rocker is disposed only at the vehicle upper side of the frame member. Due thereto, the load inputted from the rocker to the frame member is inputted toward an obliquely downward side (the vehicle lower side and vehicle transverse direction inner side). Thus, it is easy for a moment whose axial direction is the vehicle longitudinal direction to be generated at the frame member as well. Accordingly, collapsing-in of the rocker toward the vehicle transverse direction inner side can be suppressed by utilizing the torsional rigidity of the frame member.

In a vehicle side portion structure relating to a second aspect, in the first aspect, the frame member is a battery side frame, and the extending portion extends further toward a vehicle transverse direction inner side than a vehicle transverse direction center of the battery side frame.

In accordance with the vehicle side portion structure relating to the second aspect, due to the extending portion broadly extending to further toward the vehicle transverse direction inner side than the vehicle transverse direction center of the battery side frame, load can be efficiently transmitted from the extending portion to the battery side frame. Further, at the time of a side collision of the vehicle, when the pillar collapses-in and the rocker rotates with the vehicle longitudinal direction being the axial direction, load is inputted obliquely downward from the extending portion to the battery side frame. At this time, due to the extending portion extending further toward the vehicle transverse direction inner side than the vehicle transverse direction center of the battery side frame, a moment in a direction of collapsing-in toward the vehicle transverse direction inner side arises at the battery side frame. Here, the entire portion of the battery side frame, which portion is further toward the vehicle transverse direction outer side than the vehicle transverse direction center, is positioned at the lower side of the extending portion. Accordingly, when the battery side frame starts to rotate in a direction of collapsing-in toward the vehicle transverse direction inner side, the extending portion of the rocker is pushed-up toward the vehicle upper side by the portion of the battery side frame which portion is further toward the vehicle transverse direction outer side than the vehicle transverse direction center thereof. Accordingly, rotation of the rocker is suppressed, and collapsing-in of the pillar can be suppressed even more.

In a vehicle side portion structure relating to a third aspect, in the first aspect, the rocker is formed as a closed cross-sectional structure by the main body portion and the extending portion.

In accordance with the vehicle side portion structure relating to the third aspect, the rocker is formed as a closed cross-sectional structure over a wide range that includes the extending portion. Therefore, the rigidity of the rocker can be improved as compared with a case in which an extending portion that is shaped as a flat plate extends from the main body portion toward the vehicle transverse direction inner side.

In a vehicle side portion structure relating to a fourth aspect, in the second aspect, the battery side frame is fixed to the vehicle lower side of the extending portion.

In accordance with the vehicle side portion structure relating to the fourth aspect, the load that is transmitted from the pillar to the rocker at the time of a side collision of the vehicle is transmitted from the vehicle lower side surface of the extending portion to the battery side frame. In other words, the extending portion receives reaction force in a plane from the battery side frame. Due thereto, collapsing-in of the rocker is suppressed even more, and collapsing-in of the pillar can be suppressed even more.

In a vehicle side portion structure relating to a fifth aspect, in the second aspect, the battery side frame is fixed to the vehicle transverse direction inner side of the main body portion.

In accordance with the vehicle side portion structure relating to the fifth aspect, when the rocker rotates due to the collapsing-in of the pillar at the time of a side collision of the vehicle, and the rocker starts to collapse-in toward the vehicle transverse direction inner side, the main body portion starts to move (rotate) toward the vehicle transverse direction outer side, i.e., in a direction of separating from the battery side frame. At this time, due to the main body portion being fixed to the battery side frame that is disposed at the vehicle transverse direction inner side thereof, the main body portion is pulled from the battery side frame toward the vehicle transverse direction inner side. Due thereto, rotation of the rocker is suppressed even more. Accordingly, collapsing-in of the pillar can be suppressed even more.

In a vehicle side portion structure relating to a sixth aspect, in the second aspect, the battery side frame is fixed to a battery case that is disposed at a vehicle lower portion and houses a battery.

In accordance with the vehicle side portion structure relating to the sixth aspect, the battery side frame is fixed to the highly-rigid battery case, in order to house the battery. Therefore, the battery side frame receives reaction force from the battery case at the time of a side collision of the vehicle. Due thereto, the reaction force that the extending portion receives from the battery side frame increases. Accordingly, rotation of the rocker is suppressed even more, and collapsing-in of the pillar can be suppressed even more.

In a vehicle side portion structure relating to a seventh aspect, in the sixth aspect, the battery case has a flange portion extending in a vehicle transverse direction, and is fixed to a vehicle lower side of the battery side frame at the flange portion.

In accordance with the vehicle side portion structure relating to the seventh aspect, the battery case is fixed to the vehicle lower side of the battery side frame at the flange portion. Accordingly, because the battery can be mounted up to as far as a vicinity of the vehicle transverse direction inner side of the battery side frame, the battery capacity can be increased.

In a vehicle side portion structure relating to an eighth aspect, in the seventh aspect, the extending portion, the battery side frame and the flange portion are fastened together by first fasteners that pass through the battery side frame in the vehicle vertical direction.

In accordance with the vehicle side portion structure relating to the eighth aspect, when a moment arises at the rocker due to the collapsing-in of the pillar at the time of a side collision of the vehicle, load in a direction heading toward the vehicle transverse direction inner side is applied to the upper portions of the first fasteners that join the extending portion and the battery side frame. At this time, the lower portions of the first fasteners, which join the battery side frame and the flange portion, start to move toward the vehicle transverse direction outer side. In this way, due to the first fasteners passing-through the battery side frame and fastening the extending portion and the battery side frame and the flange portion together, load is efficiently transmitted from the rocker to the battery side frame and the flange portion. Further, due to the first fasteners rotating as described above, a large moment is generated at the battery side frame. Accordingly, by utilizing even more the torsional rigidity of the battery side frame, collapsing-in of the rocker can be suppressed, and collapsing-in of the pillar can be suppressed even more.

In a vehicle side portion structure relating to a ninth aspect, in the eighth aspect, an inner wall portion, which is positioned at a vehicle transverse direction inner side of the main body portion, is fastened in the vehicle transverse direction by second fasteners to an outer wall portion that is positioned at the vehicle transverse direction outer side of the battery side frame.

In accordance with the vehicle side portion structure relating to the ninth aspect, the inner wall portion, which is positioned at the vehicle transverse direction inner side of the main body portion, is fastened to the outer wall portion, which is positioned at the vehicle transverse direction outer side of the battery side frame, by the second fasteners in the vehicle transverse direction. Therefore, when the main body portion starts to collapse-in toward the vehicle transverse direction inner side at the time of a side collision, the force of the main body portion starting to separate from the battery side frame is rapidly transmitted from the fastened points of the second fasteners to the fastened points of the first fasteners, and can be received at the fastened points of the first fasteners as load in a shearing direction. Therefore, rotation of the main body portion, and accordingly, collapsing-in of the pillar, can be suppressed effectively.

In a vehicle side portion structure relating to a tenth aspect, in the ninth aspect, plural first fasteners and second fasteners are disposed alternately at a uniform interval from a vehicle front side.

In accordance with the vehicle side portion structure relating to the tenth aspect, the first fasteners that are fastened in the vehicle vertical direction and the second fasteners that are fastened in the vehicle transverse direction are disposed at a uniform interval alternately in the vehicle longitudinal direction. Therefore, the load being transmitted in a manner of being offset toward one portion is suppressed. Accordingly, collapsing-in of the rocker can be suppressed efficiently by utilizing the bending rigidity and torsional rigidity of the battery side frame. Note that what is called "uniform interval" here means that offset of an extent of about one bolt is permitted.

In a vehicle side portion structure relating to an eleventh aspect, in the ninth aspect, a lower wall portion, which is positioned at a vehicle lower side, of the battery side frame is fastened to the flange portion by third fasteners that are respectively disposed at a uniform interval between the first fasteners and the second fasteners.

In accordance with the vehicle side portion structure relating to the eleventh aspect, the lower wall portion positioned at the vehicle lower side of the battery side frame is, separately from the first fasteners, fastened to the flange portion of the battery case by third fasteners that are disposed at a uniform interval. Due thereto, the battery case is more stably supported by the battery side frame, and the battery side frame can receive more reaction force from the battery case at the time of a side collision. Accordingly, collapsing-in of the rocker can be suppressed even more.

In a vehicle side portion structure relating to a twelfth aspect, in the invention of the fourth aspect or the fifth aspect, the battery side frame is fixed to the rocker at a position corresponding to the pillar in the vehicle longitudinal direction.

In accordance with the vehicle side portion structure relating to the twelfth aspect, the extending portion of the rocker is fixed to the battery side frame at the position where the pillar collapses-in at the time of a side collision of the vehicle. Due thereto, the extending portion can receive reaction force even better from the battery side frame. Accordingly, collapsing-in of the pillar can be suppressed even more. Note that what is called "position corresponding to the pillar" here is "a position overlapping the pillar in the vehicle longitudinal direction".

A vehicle side portion structure relating to a thirteenth aspect is the vehicle side portion structure of the sixth aspect that further includes a floor cross member extending in a vehicle transverse direction at a vehicle upper side of the battery case, wherein the floor cross member is disposed at a position overlapping with at least a portion of the extending portion as seen from a vehicle lateral side.

In accordance with the vehicle side portion structure relating to the thirteenth aspect, when the rocker starts to move toward the vehicle transverse direction inner side at the time of a side collision of the vehicle, the rocker receives reaction force from the floor cross member that is disposed at a position overlapping with at least a portion of the extending portion as seen from a vehicle lateral side. Accordingly, movement of the rocker toward the vehicle transverse direction inner side is suppressed. Due thereto, the vehicle cabin is protected even better.

In a vehicle side portion structure relating to a fourteenth aspect, in the thirteenth aspect, the floor cross member is fixed to the extending portion.

In accordance with the vehicle side portion structure relating to the fourteenth aspect, the load transmitted from the rocker at the time of a side collision of the vehicle is inputted directly from the extending portion to the floor cross member. Accordingly, the rocker can receive a large reaction force toward the vehicle transverse direction outer side from the floor cross member that extends in the vehicle transverse direction. As a result, collapsing-in of the pillar is suppressed even more.

In a vehicle side portion structure relating to a fifteenth aspect, in the tenth aspect, the floor cross member is disposed at a position corresponding to the pillar in the vehicle longitudinal direction.

In accordance with the vehicle side portion structure relating to the fifteenth aspect, at the position where the pillar collapses-in at the time of a side collision of the vehicle, the rocker can receive a large reaction force from the floor cross member. Accordingly, collapsing-in of the pillar is suppressed even more. Note that what is called "position corresponding to the pillar" here is "a position overlapping the pillar in the vehicle longitudinal direction".

A vehicle side portion structure relating to a sixteenth aspect is the vehicle side portion structure of the tenth aspect that further includes a bracket that connects a vehicle transverse direction inner side surface of the pillar, a vehicle upper side surface of a vehicle transverse direction end portion of the floor cross member, and a vehicle upper side surface of the battery case.

In accordance with the vehicle side portion structure relating to the sixteenth aspect, the vehicle transverse direction inner side surface of the pillar, via the bracket, receives reaction force from the vehicle upper side surface of a vehicle transverse direction end portion of the floor cross member and from the vehicle upper side surface of the battery case. Accordingly, collapsing-in of the pillar is suppressed even more effectively. Note that what is called "end portion" of the floor cross member here means a portion that includes the end point and has a predetermined length in the vehicle transverse direction.

As described above, the vehicle side portion structure relating to the present invention has the excellent effect of, at the time of a side collision of a vehicle, being able to suppress collapsing-in of a pillar toward the vehicle transverse direction inner side and protect the vehicle cabin.

### BRIEF DESCRIPTION OF THE DRAWINGS

Exemplary embodiments of the present disclosure will be described in detail based on the following figures, wherein:
Fig. 1 is an exploded perspective view of a battery frame and a battery case of a vehicle side portion structure relating to a present embodiment;
Fig. 2 is a schematic sectional view in which a longitudinal section of the vehicle side portion structure relating to the present embodiment is seen from a vehicle left side;
Fig. 3 is a cross-sectional view of the periphery of a fasten-together bolt of Fig. 2;
Fig. 4 is a cross-sectional view of the periphery of a transverse bolt of Fig. 2;
Fig. 5 is a cross-sectional view of the periphery of a case holding bolt of Fig. 2;
Fig. 6 is an enlarged perspective view illustrating the periphery of a bracket of the vehicle side portion structure relating to the present embodiment; and
Fig. 7 is an exploded perspective view of a battery frame and a battery case of a vehicle side portion structure relating to a modified example.

### DETAILED DESCRIPTION

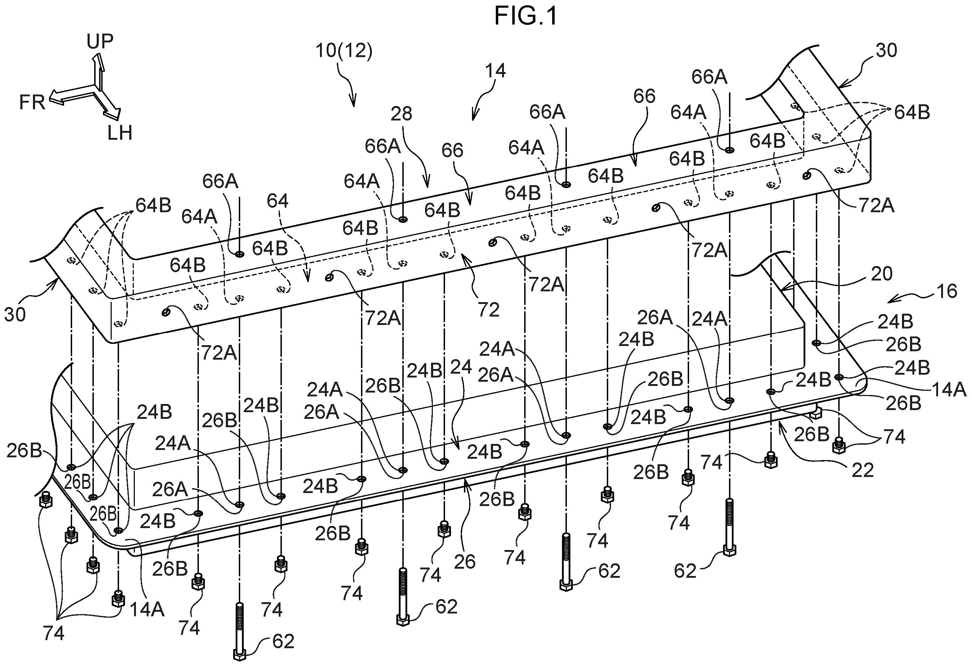

A vehicle side portion structure relating to an embodiment of the present invention is described hereinafter by using Fig. 1 through Fig. 6. Note that arrow FR, arrow UP, and arrow LH that are shown appropriately in the respective drawings indicate the front side, the upper side, and the left side in the left-right direction (the transverse direction) of a vehicle, respectively. Further, when longitudinal, vertical, and left-right directions are used in the following explanation without being specified, they refer to the longitudinal of the vehicle longitudinal direction, the vertical of the vehicle vertical direction, and the left and right of the vehicle left-right direction (transverse direction), respectively.

The left side portions of a battery frame 14 and a battery case 16 of a vehicle 12, in which the vehicle side portion structure relating to the present embodiment is employed, are illustrated in Fig. 1. The vehicle 12 is an electric vehicle whose drive source is an unillustrated motor that operates by electric power supplied from a battery 18 (see Fig. 13) housed in the battery case 16. The vehicle 12 has the battery frame 14 and the battery case 16 at the lower portion thereof.

### (Battery Case 16)

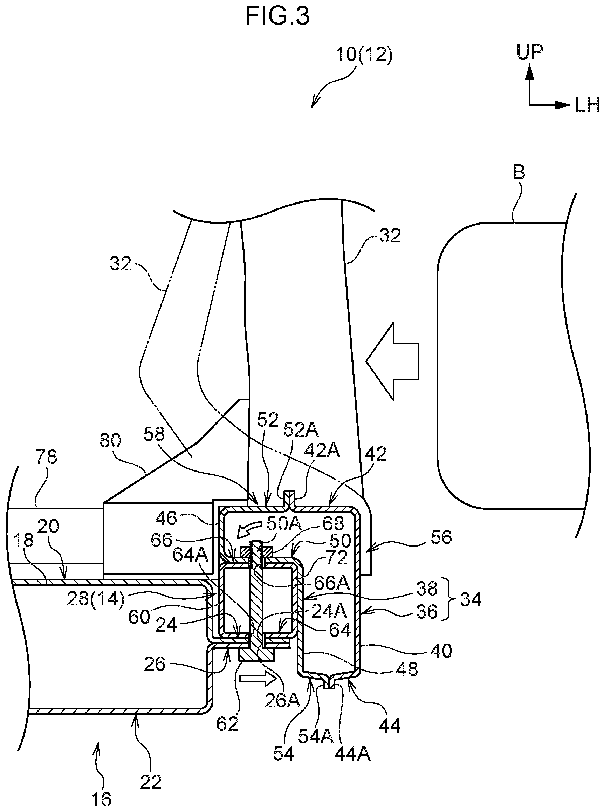

The battery case 16 is structured to include an upper case 20 disposed at the vehicle upper side thereof, and a lower case 22 disposed at the vehicle lower side thereof. The battery 18 (see Fig. 3) is housed between the upper case 20 and the lower case 22. The upper case 20 also serves as a floor panel.

The upper case 20 is formed in the shape of a box that is substantially rectangular as seen in plan view and whose vehicle lower side is open. Further, the lower case 22 is formed in the shape of a box that is substantially rectangular as seen in plan view and whose vehicle upper side is open. An upper flange portion 24 that extends substantially toward horizontal direction outer sides is formed at the lower end portion of the upper case 20. Similarly, a lower flange portion 26 that extends substantially toward horizontal direction outer sides is formed at the upper end portion of the lower case 22. Due thereto, the upper case 20 and the lower case 22 are each formed substantially in the shape of a flat hat, as seen in a longitudinal section viewed from the vehicle longitudinal direction and as seen in a longitudinal section viewed from the vehicle transverse direction. The upper flange portion 24 and the lower flange portion 26 are superposed and joined together in the vehicle vertical direction.

### (Battery Frame 14)

The battery frame 14 is formed in the shape of a frame that is substantially rectangular as seen in a plan view, and is disposed so as to be superposed on the vehicle upper side of the upper flange portion 24 of the battery case 16. The battery frame 14 is structured to include a pair of left and right battery side frames 28 extending in the vehicle longitudinal direction, and a pair of front and rear battery cross frames 30 connecting the front end portions and the rear end portions of the pair of left and right battery side frames 28, respectively. The pair of left and right battery side frames 28 and the pair of front and rear battery cross frames 30 respectively are formed in the shapes of hollow, angular tubes. Note that the battery frame may be solid. Further, illustration of the battery side frame at the right side is omitted in Fig. 1. Because the battery side frame at the right side has left-right symmetry with respect to the battery side frame 28 at the left side, in the following explanation, the battery side frame 28 at the left side is described, and description of the battery side frame at the right side is omitted.

### (Center Pillar 32)

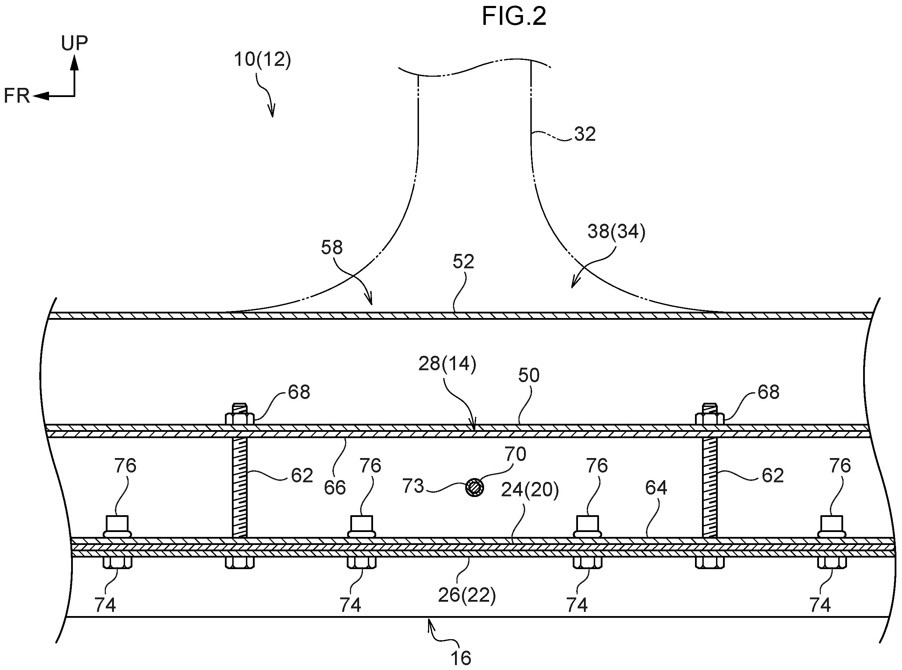

A longitudinal section of the substantially central portion in the vehicle longitudinal direction of a vehicle left side portion 10 is illustrated in Fig. 2. As illustrated in Fig. 2, a center pillar 32, which serves as a pillar and extends in the vehicle vertical direction, is disposed at the substantially central portion in the vehicle longitudinal direction of the vehicle left side portion 10. A rocker 34 extending along the vehicle longitudinal direction is disposed at the lower portion of the vehicle left side portion 10. The lower end portion of the center pillar 32 is joined to the rocker 34.

### (Rocker 34)

As illustrated in Fig. 3, the rocker 34 has an outer panel 36 disposed at the vehicle transverse direction outer side thereof, and an inner panel 38 disposed at the vehicle transverse direction inner side thereof.

The outer panel 36 is structured to include an outer wall portion 40 that extends in the vehicle vertical direction and structures the vehicle transverse direction outer side surface of the rocker 34, an outer upper wall portion 42 extending toward the vehicle transverse direction inner side from the upper end portion of the outer wall portion 40, and an outer lower wall portion 44 extending toward the vehicle transverse direction inner side from the lower end portion of the outer wall portion 40. A flange portion 42A bent toward the vehicle upper side is formed at the vehicle transverse direction inner side end portion of the outer upper wall portion 42. A flange portion 44A bent toward the vehicle lower side is formed at the vehicle transverse direction inner side end portion of the outer lower wall portion 44.

The inner panel 38 is structured to include an upper side inner wall portion 46 that extends in the vehicle vertical direction at the vehicle upper side and structures the vehicle transverse direction inner side surface of the rocker 34, and a lower side inner wall portion 48 that serves as an inner wall portion extending in the vehicle vertical direction at further toward the vehicle transverse direction outer side than the upper side inner wall portion 46.

Further, the inner panel 38 has an intermediate wall portion 50 connecting the lower end portion of the upper side inner wall portion 46 and the upper end portion of the lower side inner wall portion 48 in the vehicle transverse direction. Moreover, the inner panel 38 has an inner upper wall portion 52 extending from the upper end portion of the upper side inner wall portion 46 toward the vehicle transverse direction outer side, and an inner lower wall portion 54 extending from the lower end portion of the lower side inner wall portion 48 toward the vehicle transverse direction outer side.

A flange portion 52A bent toward the vehicle upper side is formed at the vehicle transverse direction outer side end portion of the inner upper wall portion 52. The flange portion 52A of the inner upper wall portion 52 is welded to the flange portion 42A of the outer upper wall portion 42. Further, a flange portion 54A bent toward the vehicle lower side is formed at the vehicle transverse direction outer side end portion of the inner lower wall portion 54. The flange portion 54A of the inner lower wall portion 54 is welded to the flange portion 44A of the outer lower wall portion 44. The rocker 34 is thereby formed as a closed cross-sectional structure.

Here, the rocker 34 has a main body portion 56, which is structured to include the outer panel 36 and the lower side inner wall portion 48 of the inner panel 38, and an extending portion 58, which is structured to include the inner upper wall portion 52, the upper side inner wall portion 46 and the intermediate wall portion 50 of the inner panel 38. In other words, the rocker 34 is structured to include the main body portion 56 that extends in the vehicle vertical direction, and the extending portion 58 that extends toward the vehicle transverse direction inner side from the upper portion of the main body portion 56. The rocker 34 is formed to be a closed cross-sectional structure by the main body portion 56 and the extending portion 58.

With respect to the rocker 34, the battery side frame 28 is disposed at the vehicle transverse direction inner side of the main body portion 56 and the vehicle lower side of the extending portion 58. In other words, the rocker 34 is disposed so as to span from the vehicle upper side to the vehicle transverse direction outer side of the battery side frame 28. The battery side frame 28 is fixed to the vehicle lower side of the extending portion 58. Further, the battery side frame 28 is fixed to the vehicle transverse direction inner side of the main body portion 56.

The battery side frame 28 is structured such that the bending rigidity thereof is higher than the bending rigidity of the rocker 34. Moreover, the battery side frame 28 is structured such that the torsional rigidity thereof is higher than the torsional rigidity of the rocker 34. What is called bending rigidity here means the bending rigidity with respect to an external force directed toward the vehicle lower side. The upper side inner wall portion 46 of the rocker 34 is formed to be flush with an inner wall portion 60, which is positioned at the vehicle transverse direction inner side, of the battery side frame 28.

### (Fasten-Together Bolt 62)

As illustrated in Fig. 3, the upper flange portion 24 and the lower flange portion 26 of the battery case 16, and the battery side frame 28, and the intermediate wall portion 50 at the extending portion 58 of the rocker 34, are fastened together by fasten-together bolts 62 that serve as first fasteners.

As illustrated in Fig. 1, as an example, four of the fasten-together bolts 62 are disposed at a uniform interval in the vehicle longitudinal direction.

As illustrated in Fig. 3, the fasten-together bolt 62 is inserted through through-hole 26A of the lower flange portion 26 and through-hole 24A of the upper flange portion 24. Further, the fasten-together bolt 62 passes-through the battery side frame 28 in the vehicle vertical direction by being inserted through through-hole 64A of a lower wall portion 64 positioned at the vehicle lower side of the battery side frame 28 and through-hole 66A of an upper wall portion 66 positioned at the vehicle upper side of the battery side frame 28. Moreover, the fasten-together bolt 62 is inserted-through through-hole 50A formed in the intermediate wall portion 50 at the extending portion 58 of the rocker 34.

A weld nut 68 is welded to the peripheral edge portion of the through-hole 50A at the intermediate wall portion 50 of the extending portion 58 of the rocker 34. The fasten-together bolt 62 is inserted through the through-hole 26A, the through-hole 24A, the through-hole 66A and the through-hole 50A from the lower side of the lower flange portion 26, and is screwed together with the weld nut 68.

### (Transverse Bolt 70)

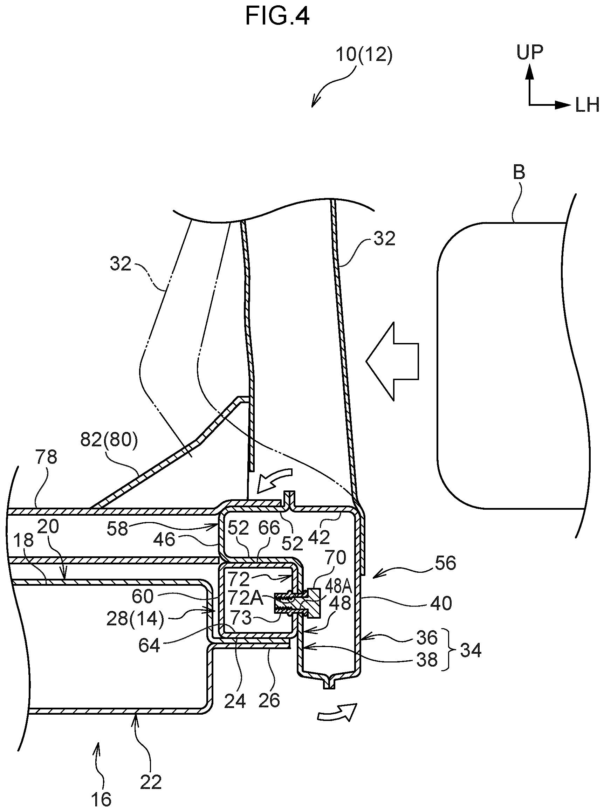

As illustrated in Fig. 4, an outer wall portion 72, which is positioned at the vehicle transverse direction outer side, of the battery side frame 28 is fastened to the lower side inner wall portion 48 at the main body portion 56 of the rocker 34 by transverse bolts 70 serving as second fasteners. Specifically, through-holes 72A are formed in the outer wall portion 72 of the battery side frame 28. Through-holes 48A are formed in the lower side inner wall portion 48 of the main body portion 56 of the rocker 34, at positions corresponding to the through-holes 72A of the battery side frame 28. Further, blind nuts 73 are provided at the outer wall portion 72 of the battery side frame 28, at the peripheral edge portions of the through-holes 72A. The transverse bolts 70 are screwed-together, from the vehicle transverse direction outer side of the lower side inner wall portion 48, with the blind nuts 73 are that inserted through the through-holes 48A and the through-holes 72A.

As illustrated in Fig. 1, five of the through-holes 72A are formed in the outer wall portion 72 of the battery side frame 28. Namely, five of the transverse bolts 70 (see Fig. 4) are disposed at a uniform interval in the vehicle longitudinal direction. One each of the above-described fasten-together bolts 62 is disposed between the transverse bolts 70. In other words, the transverse bolts 70 and the fasten-together bolts 62 are disposed alternately at a uniform interval from the vehicle front side. Note that the numbers of and the arrangement of the fasten-together bolts and the transverse bolts are not limited to those described above.

As illustrated in Fig. 2, among the five transverse bolts 70, the transverse bolt 70 that is positioned at the vehicle longitudinal direction central portion (the third from the vehicle front side) is disposed at a position corresponding to the vehicle longitudinal direction central portion of the center pillar 32.

### (Case Holding Bolt 74)

As illustrated in Fig. 1, Fig. 2 and Fig. 5, the battery case 16 is fastened to and held at the battery frame 14 by, in addition to the fasten-together bolts 62, case holding bolts 74 serving as plural third fasteners. As illustrated in Fig. 1 and Fig. 2, the case holding bolts 74 are respectively disposed between the fasten-together bolts 62 and the transverse bolts 70 in the vehicle longitudinal direction.

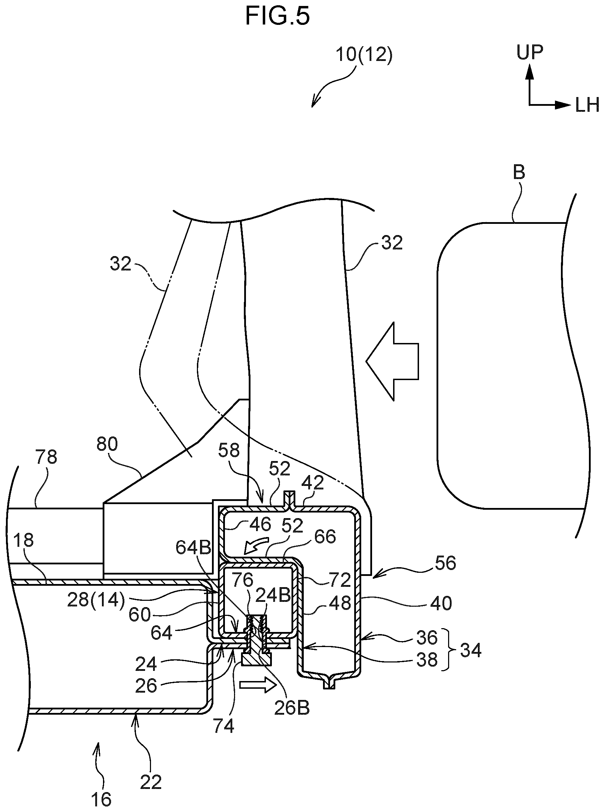

As illustrated in Fig. 1 and Fig. 5, through-holes 24B are formed in the upper flange portion 24, and through-holes 26B are formed in the lower flange portion 26. Further, plural through-holes 64B are formed in the lower wall portion 64 of the battery side frame 28 at positions corresponding to the aforementioned through-holes 24B and through-holes 26B. As illustrated in Fig. 5, blind nuts 76 are provided at the peripheral edge portions of the through-holes 64B of the battery side frame 28. The case holding bolts 74 are screwed-together, from the vehicle lower side of the lower flange portion 26, with the blind nuts 76 that are inserted through the through-holes 26B, the through-holes 24B and the through-holes 64B.

As illustrated in Fig. 1, the battery frame 14 is fastened to the upper flange portion 24 and the lower flange portion 26 of the battery case 16 by the plural case holding bolts 74, at the front and rear pair of battery cross frames 30 as well. The case holding bolts 74 are disposed at corner portions 14A of the battery frame 14. Note that the battery case does not have to be fixed to the battery frame at the corner portions. Further, for example, transverse bolts may be disposed at the corner portions of the battery frame.

### (Floor Cross Member 78)

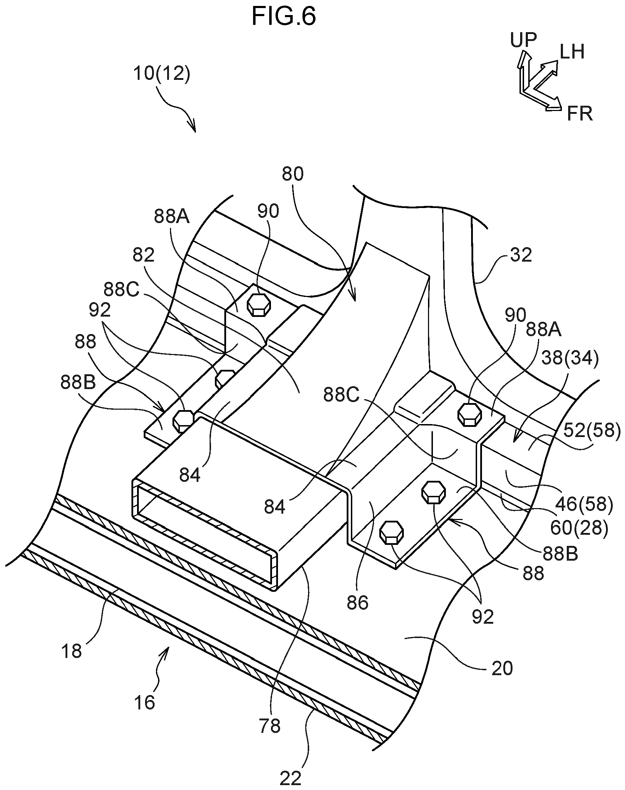

As illustrated in Fig. 6, a floor cross member 78 that structures the frame of the vehicle body lower portion extends in the vehicle transverse direction at the vehicle upper side of the battery case 16. The floor cross member 78 is disposed at a portion corresponding to the center pillar 32 in the vehicle longitudinal direction. Further, the floor cross member 78 is disposed at a position overlapping the extending portion 58 (see Fig. 3 through Fig. 5) as seen from a lateral side of the vehicle. The vehicle transverse direction end portions of the floor cross member 78 are fixed to the vehicle transverse direction inner sides of the extending portions 58 (see Fig. 3 through Fig. 5) of the rockers 34. Note that, as described above, description is given of a case in which, at the vehicle 12 relating to the present embodiment, the upper case 20 also serves as a floor case, but the present disclosure is not limited to this, and a floor panel may be disposed along the lower end portion of the floor cross member.

### (Bracket 80)

The vehicle transverse direction inner side surface of the center pillar 32, and the vehicle upper side surface of the vehicle transverse direction end portion of the floor cross member 78, and the vehicle upper side surface of the upper case 20 at the battery case 16 are connected by a bracket 80.

The bracket 80 has a main body portion 82 that is substantially triangular as seen from the vehicle longitudinal direction and that connects the vehicle transverse direction inner side surface of the center pillar 32 and the vehicle upper side surface of the vehicle transverse direction end portion of the floor cross member 78. Further, the bracket 80 has a pair of front and rear first extending portions 84 that extend from the main body portion 82 along the vehicle upper side surface of the floor cross member 78. The first extending portion 84 at the front side extends from the front end portion of the main body portion 82 toward the vehicle front side. The first extending portion 84 at the rear side extends from the rear end portion of the main body portion 82 toward the vehicle rear side. A pair of front and rear second extending portions 86 extend toward the vehicle lower side from the pair of front and rear first extending portions 84, along the vehicle front side surface and vehicle rear side surface of the floor cross member 78 respectively.

The bracket 80 has a pair of front and rear flange portions 88. Each of the flange portions 88 is structured to include an upper flange portion 88A extending in a substantially horizontal direction at the vehicle upper side, a lower flange portion 88B extending in a substantially horizontal direction at the vehicle lower side, and a connecting portion 88C connecting the vehicle transverse direction inner side end portion of the upper flange portion 88A and the vehicle transverse direction outer side end portion of the lower flange portion 88B in the vehicle vertical direction, such that each flange portion 88 is formed in the shape of a crank as seen from the vehicle longitudinal direction. The upper flange portions 88A are disposed along the inner upper wall portion 52 of the extending portion 58 of the rocker 34. The lower flange portions 88B are disposed along the vehicle upper side surface of the upper case 20 at the battery case 16, and extend from the lower end portions of the second extending portions 86. Moreover, the connecting portions 88C are disposed along the upper side inner wall portion 46 of the extending portion 58 of the rocker 34 and the inner wall portion 60 of the battery side frame 28, and extend from vehicle transverse direction end portions of the second extending portions 86.

The pair of flange portions 88 are, at the upper flange portions 88A thereof, respectively fastened by bolts 90 and weld nuts (not illustrated) to the inner upper wall portion 52 of the rocker 34. Further, the pair of flange portions 88 are, at the lower flange portions 88B thereof, respectively fastened to the upper case 20 of the battery case 16 by two bolts 92 and weld nuts (not illustrated). Note that the shape of the bracket and the mode of fixing thereof are not limited to those described above.

### (Operation)

Operation of the present embodiment is described next.

In accordance with the vehicle 12 that is provided with the vehicle side portion structure relating to the present embodiment, as illustrated in Fig. 3 through Fig. 5, at the time when barrier B collides with the left side surface of the vehicle 12 (hereinafter called "at the time of a side collision"), load is inputted to the center pillar 32 at the vehicle upper side of the rocker 34. At this time, a moment in the direction of collapsing in toward the vehicle transverse direction inner side with the vehicle longitudinal direction being the axial direction thereof, is generated at the rocker 34 that is connected to the lower end portion of the center pillar 32. Here, the battery side frame 28 is disposed at the vehicle lower side of the extending portion 58 of the rocker 34. Accordingly, due to the extending portion 58 receiving upwardly-directed reaction force from the battery side frame 28, collapsing-in of the rocker 34 toward the vehicle transverse direction inner side is suppressed.

Further, the rocker 34 has the main body portion 56 and the extending portion 58, and is disposed so as to span from the vehicle upper side to the vehicle transverse direction outer side of the battery side frame 28. Owing to this arrangement, the rotational axis of the moment generated at the rocker 34 at the time of a side collision of the vehicle 12 is positioned further toward the vehicle lower side than in a case in which the rocker is disposed only at the vehicle upper side of the battery side frame. Due thereto, the load inputted from the rocker 34 to the battery side frame 28 is inputted toward an obliquely downward side (the vehicle lower side and vehicle transverse direction inner side). Thus, it is easy for a moment whose axial direction is the vehicle longitudinal direction to be generated at the battery side frame 28 as well. Accordingly, collapsing-in of the rocker 34 toward the vehicle transverse direction inner side can be suppressed by utilizing the torsional rigidity of the battery side frame 28.

Further, in accordance with the vehicle 12 that is provided with the vehicle side portion structure relating to the present embodiment, due to the battery side frame 28 whose bending rigidity is higher than the bending rigidity of the rocker 34, the extending portion 58 of the rocker 34 can receive the large reaction force toward the vehicle upper side from the battery side frame 28. Accordingly, collapsing-in of the rocker 34 is suppressed effectively.

Moreover, in accordance with the vehicle 12 that is provided with the vehicle side portion structure relating to the present embodiment, due to the battery side frame 28 having high torsional rigidity and being difficult to twist, rotation of the rocker 34 with the vehicle longitudinal direction being the axial direction is suppressed even more.

Still further, in accordance with the vehicle 12 that is provided with the vehicle side portion structure relating to the present embodiment, due to the extending portion 58 broadly extending further toward the vehicle transverse direction inner side than the vehicle transverse direction center of the battery side frame 28, load can be efficiently transmitted from the extending portion 58 to the battery side frame 28.

At the time of a side collision of the vehicle 12, when the center pillar 32 collapses-in and the rocker 34 rotates with the vehicle longitudinal direction being the axial direction, load is inputted obliquely downward from the extending portion 58 to the battery side frame 28. At this time, due to the extending portion 58 extending to further toward the vehicle transverse direction inner side than the vehicle transverse direction center of the battery side frame 28, a moment in a direction of collapsing-in toward the vehicle transverse direction inner side arises at the battery side frame 28. Here, the entire portion of the battery side frame 28, which portion is further toward the vehicle transverse direction outer side than the vehicle transverse direction center, is positioned at the lower side of the extending portion 58. Accordingly, when the battery side frame 28 starts to rotate in a direction of collapsing-in toward the vehicle transverse direction inner side, the extending portion 58 of the rocker 34 is pushed-up toward the vehicle upper side by the portion of the battery side frame 28 which portion is further toward the vehicle transverse direction outer side than the vehicle transverse direction center thereof. Accordingly, rotation of the rocker 34 is suppressed.

Further, in accordance with the vehicle 12 that is provided with the vehicle side portion structure relating to the present embodiment, the rocker 34 is formed as a closed cross-sectional structure over a wide range that includes the extending portion 58. Therefore, the rigidity of the rocker 34 can be improved as compared with a case in which an extending portion that is shaped as a flat plate extends from the main body portion toward the vehicle transverse direction inner side.

Moreover, in accordance with the vehicle 12 that is provided with the vehicle side portion structure relating to the present embodiment, as illustrated in Fig. 3, the battery side frame 28 is fastened to the intermediate wall portion 50 of the extending portion 58 of the rocker 34 by the fasten-together bolts 62. Therefore, the load that is transmitted from the center pillar 32 to the rocker 34 at the time of a side collision is transmitted from the vehicle lower side surface of the intermediate wall portion 50 to the upper wall portion 66 of the battery side frame 28. Namely, the intermediate wall portion 50 of the extending portion 58 receives reaction force in a plane from the upper wall portion 66 of the battery side frame 28. Collapsing-in of the rocker 34 is thereby suppressed even more.

Still further, in accordance with the vehicle 12 that is provided with the vehicle side portion structure relating to the present embodiment, as illustrated in Fig. 4, when the rocker 34 rotates due to the collapsing-in of the center pillar 32 at the time of a side collision, and the rocker 34 starts to collapse-in toward the vehicle transverse direction inner side, the main body portion 56 starts to move (rotate) toward the vehicle transverse direction outer side, i.e., in a direction of separating from the battery side frame 28. At this time, the main body portion 56 is fixed to the battery side frame 28 that is disposed at the vehicle transverse direction inner side thereof. Due thereto, the main body portion 56 is pulled from the battery side frame 28 toward the vehicle transverse direction inner side. Rotation of the rocker 34 is thereby suppressed even more. In particular, as illustrated in Fig. 1, the battery frame 14 is formed in a substantially rectangular shape as seen in a plan view, and the pair of left and right battery side frames 28 are connected by the pair of front and rear battery cross frames 30. Accordingly, the force by which the battery side frame 28 pulls the main body portion 56 toward the vehicle transverse direction inner side is improved more.

In accordance with the vehicle 12 that is provided with the vehicle side portion structure relating to the present embodiment, the battery side frame 28 is fixed to the highly-rigid battery case 16, in order to house the battery 18. Therefore, the battery side frame 28 receives reaction force from the battery case 16 at the time of a side collision of the vehicle 12. Due thereto, the reaction force that the extending portion 58 receives from the battery side frame 28 increases. Accordingly, rotation of the rocker 34 is suppressed even more.

Further, in accordance with the vehicle 12 that is provided with the vehicle side portion structure relating to the present embodiment, the battery case 16 is fixed to the lower side of the battery side frame 28 at the upper flange portion 24 and the lower flange portion 26. Accordingly, because the battery 18 can be mounted up to as far as a vicinity of the vehicle transverse direction inner side of the battery side frame 28, the battery capacity can be increased.

Still further, in accordance with the vehicle 12 that is provided with the vehicle side portion structure relating to the present embodiment, as illustrated in Fig. 3, when a moment arises at the rocker 34 due to the collapsing-in of the center pillar 32 at the time of a side collision, load in a direction heading toward the vehicle transverse direction inner side is applied to the upper portions of the fasten-together bolts 62 that join the extending portion 58 and the battery side frame 28. At this time, the lower end portions of the fasten-together bolts 62, which join the battery side frame 28 on the one hand and the upper flange portion 24 and the lower flange portion 26 on the other hand, start to move toward the vehicle transverse direction outer side.

In this way, due to the fasten-together bolts 62 passing-through the battery side frame 28 and fastening together the extending portion 58, the battery side frame 28, the upper flange portion 24 and the lower flange portion 26, load is efficiently transmitted from the rocker 34 to the battery side frame 28 and the battery case 16. Further, due to the fasten-together bolts 62 rotating as described above, a large moment is generated at the battery side frame 28. Accordingly, collapsing-in of the rocker 34 can be suppressed by utilizing even more the torsional rigidity of the battery side frame 28.

In accordance with the vehicle 12 that is provided with the vehicle side portion structure relating to the present embodiment, as illustrated in Fig. 4, the lower side inner wall portion 48, which is positioned at the vehicle transverse direction inner side of the main body portion 56, is fastened to the outer wall portion 72, which is positioned at the vehicle transverse direction outer side at the battery side frame 28, by the transverse bolts 70 in the vehicle transverse direction. Therefore, when the main body portion 56 starts to collapse-in toward the vehicle transverse direction inner side at the time of a side collision, the force of the main body portion 56 starting to separate from the battery side frame 28 is rapidly transmitted from the fastened points of the transverse bolts 70 to the fastened points of the fasten-together bolts 62 (see Fig. 3), and can be received at the fastened points of the fasten-together bolts 62 as load in a shearing direction.
Therefore, rotation of the main body portion 56, and accordingly, collapsing-in of the center pillar 32, can be suppressed effectively.

Moreover, in accordance with the vehicle 12 that is provided with the vehicle side portion structure relating to the present embodiment, as illustrated in Fig. 1, the transverse bolts 70 (see Fig. 4) and the fasten-together bolts 62 are disposed at a uniform interval alternately from the vehicle front side. Accordingly, the load being transmitted in a manner of being offset toward one portion is suppressed, and collapsing-in of the rocker 34 can be suppressed efficiently by utilizing the bending rigidity and the torsional rigidity of the battery side frame 28.

In accordance with the vehicle 12 that is provided with the vehicle side portion structure relating to the present embodiment, as illustrated in Fig. 5, the lower wall portion 64 positioned at the vehicle lower side of the battery side frame 28 is, separately from the fasten-together bolts 62, fastened to the upper flange portion 24 and the lower flange portion 26 of the battery case 16 by the case holding bolts 74 that are disposed at a uniform interval. Due thereto, the battery case 16 is more stably supported by the battery side frame 28, and the battery side frame 28 can receive more reaction force from the battery case 16 at the time of a side collision. Accordingly, collapsing-in of the rocker 34 can be suppressed even more.

Further, in accordance with the vehicle 12 that is provided with the vehicle side portion structure relating to the present embodiment, as illustrated in Fig. 2, the battery side frame 28 is fixed to the rocker 34 by the transverse bolt 70, at a position corresponding to the center pillar 32 in the vehicle longitudinal direction. Due thereto, the extending portion 58 can receive reaction force even better from the battery side frame 28.

Moreover, in accordance with the vehicle 12 that is provided with the vehicle side portion structure relating to the present embodiment, as illustrated in Fig. 3 through Fig. 6, when the rocker 34 starts to move toward the vehicle transverse direction inner side at the time of a side collision, the rocker 34 receives reaction force from the floor cross member 78 that is disposed at a position overlapping the extending portion 58 as seen from a vehicle lateral side. Accordingly, movement of the rocker 34 toward the vehicle transverse direction inner side is suppressed. Due thereto, the vehicle cabin is protected even better.

Still further, in accordance with the vehicle 12 that is provided with the vehicle side portion structure relating to the present embodiment, the floor cross member 78 is fixed to the vehicle transverse direction inner side of the extending portion 58. Therefore, the load transmitted from the rocker 34 at the time of a side collision of the vehicle 12 is inputted directly from the extending portion 58 to the floor cross member 78. Accordingly, the rocker 34 can receive a large reaction force toward the vehicle transverse direction outer side from the floor cross member 78 that extends in the vehicle transverse direction.

In accordance with the vehicle 12 that is provided with the vehicle side portion structure relating to the present embodiment, as illustrated in Fig. 6, the floor cross member 78 is disposed at a position corresponding to the center pillar 32 in the vehicle longitudinal direction. Therefore, at the position where the center pillar 32 collapses-in at the time of a side collision of the vehicle 12, the rocker 34 can receive a large reaction force from the floor cross member 78.

Further, in accordance with the vehicle 12 that is provided with the vehicle side portion structure relating to the present embodiment, the vehicle transverse direction inner side surface of the center pillar 32, via the bracket 80, receives reaction force from the vehicle upper side surface of a vehicle transverse direction end portion of the floor cross member 78 and from the vehicle upper side surface of the upper case 20 at the battery case 16. Accordingly, collapsing-in of the center pillar 32 is suppressed even more effectively.

### [Supplemental Description of Above Embodiment]

The above embodiment describes that the bending rigidity of the battery side frame 28 is higher than the bending rigidity of the rocker 34. However, the present disclosure is not limited to this, and the bending rigidity of the battery side frame may be lower than the bending rigidity of the rocker.

Further, the above embodiment describes that the torsional rigidity of the battery side frame 28 is higher than the torsional rigidity of the rocker 34. However, the present disclosure is not limited to this, and the torsional rigidity of the battery side frame may be lower than the torsional rigidity of the rocker.

Moreover, the above embodiment describes that the upper side inner wall portion 46 of the rocker 34 is formed so as to be flush with the inner wall portion 60 that is positioned at the vehicle transverse direction inner side of the battery side frame 28. However, the present disclosure is not limited to this. For example, the extending portion may extend toward the vehicle transverse direction inner side further than the inner wall portion of the battery side frame. Further, the upper side inner wall portion of the extending portion may be positioned further toward the vehicle transverse direction outer side than the inner wall portion of the battery side frame.

As illustrated in Fig. 3, the above embodiment describes that the battery side frame 28 is fastened to the vehicle lower side of the extending portion 58 by the fasten-together bolts 62, but the present disclosure is not limited to this. For example, the battery side frame may be connected to the vehicle lower side of the extending portion via another member. Further, there may be a gap between the battery side frame and the extending portion.

Further, although the above embodiment describes that the battery side frame 28 is fixed to the vehicle transverse direction inner side of the main body portion 56, the present disclosure is not limited to this. For example, the battery side frame may be connected to the vehicle transverse direction inner side of the main body portion via another member. Further, there may be a gap between the battery side frame and the main body portion.

Moreover, although the above embodiment describes that the battery side frame 28 is fixed to the battery case 16, the present disclosure is not limited to this, and the battery side frame does not have to be fixed to the battery case. Further, the vehicle does not have to have a battery case. For example, a battery lower panel may be provided at the vehicle lower side of the battery frame, and the battery may be disposed at the vehicle upper side of the battery lower panel, at the inner side of the battery frame.

Still further, the above embodiment describes that the battery case 16 has the upper flange portion 24 and the lower flange portion 26, and is fixed to the vehicle lower side of the battery side frame 28 at the upper flange portion 24 and the lower flange portion 26. However, the present disclosure is not limited to this, and the battery case may be fixed to the battery frame at a place other than the flange portions.

The above embodiment describes that the extending portion 58, the battery side frame 28, the upper flange portion 24 and the lower flange portion 26 are fastened together in the vehicle vertical direction by the fasten-together bolts 62 that pass through the battery side frame 28, but the present disclosure is not limited to this, and the vehicle side portion structure does not have to have the fasten-together bolts 62.

Further, the above embodiment describes that the lower side inner wall portion 48, which is positioned at the vehicle transverse direction inner side of the main body portion 56, is fastened in the vehicle transverse direction by the transverse bolts 70 to the outer wall portion 72 that is positioned at the vehicle transverse direction outer side at the battery side frame 28. However, the present disclosure is not limited to this, and the vehicle side portion structure does not have to have the transverse bolts 70.

Still further, although the above embodiment describes that the fasten-together bolts 62 and the transverse bolts 70 are disposed alternately at a uniform interval from the vehicle front side, the present disclosure is not limited to this. For example, two fasten-together bolts and two transverse bolts may be disposed alternately. Further, for example, two fasten-together bolts and one transverse bolt may be disposed alternately. Moreover, for example, one of each of a fasten-together bolt, a transverse bolt and a case holding bolt may be disposed at a uniform interval.

The above embodiment describes that the lower wall portion 64, which is positioned at the vehicle lower side of the battery side frame 28, is fastened to the battery case 16 by the case holding bolts 74 that are respectively disposed at a uniform interval between the fasten-together bolts 62 and the transverse bolts 70. However, the present disclosure is not limited to this, and the vehicle side portion structure does not have to have the case holding bolts 74.

Further, the above embodiment describes that the battery side frame 28 is fixed to the rocker 34 by the transverse bolt 70 at a position corresponding to the center pillar 32 in the vehicle longitudinal direction, but the present disclosure is not limited to this. For example, the battery side frame may be fixed to the rocker by a fasten-together bolt at a position corresponding to a pillar in the vehicle longitudinal direction. In this case as well, the extending portion can well receive reaction force from the battery side frame. Further, the battery side frame 28 is not limited to being fixed to the rocker at the position of the center pillar 32, and may be fixed at a position overlapping another pillar such as the front pillar or the rear pillar.

Still further, although the above embodiment describes that the floor cross member 78 is disposed at a position overlapping the extending portion 58 as seen from a vehicle lateral side, the present disclosure is not limited to this. Movement of the rocker toward the vehicle transverse direction inner side is suppressed provided that the floor cross member is disposed at a position overlapping at least a portion of the extending portion as seen from a vehicle lateral side. Note that the floor cross member may be disposed at a position that does not overlap the extending portion as seen from a vehicle lateral side.

Moreover, the above embodiment describes that the floor cross member 78 is fixed to the vehicle transverse direction inner side of the extending portion 58, but the present disclosure is not limited to this. For example, the floor cross member may be fixed to the rocker at another place. Further, the floor cross member does not have to be fixed directly to the rocker.

Although the above embodiment describes that the floor cross member 78 is disposed at a position corresponding to the center pillar 32 in the vehicle longitudinal direction, the present disclosure is not limited to this, and the floor cross member may be disposed so as to be offset from the center pillar in the vehicle longitudinal direction.

Further, the above embodiment describes that the vehicle 12 has the bracket 80 that connects the vehicle transverse direction inner side surface of the center pillar 32, and the vehicle upper side surface of a vehicle transverse direction end portion of the floor cross member 78, and the vehicle upper side surface of the battery case 16. However, the present disclosure is not limited to this, and, for example, the vehicle may have a bracket that does not extend all the way to the battery case and that only connects the vehicle transverse direction inner side surface of the center pillar and the vehicle upper side surface of a vehicle transverse direction end portion of the floor cross member. Further, the vehicle does not have to have the bracket.

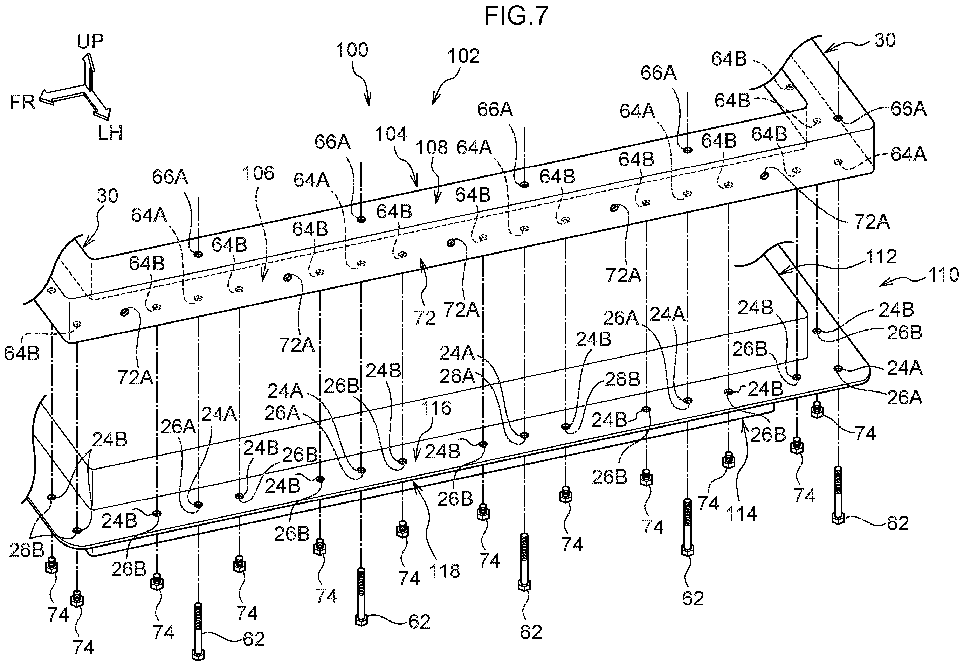

The above embodiment describes that the four fasten-together bolts 62 are disposed between the five transverse bolts 70, and that the case holding bolts 74 are disposed at the corner portions 14A of the battery frame 14. However, the present disclosure is not limited to this, and may employ the vehicle side portion structure relating to the modified example illustrated in Fig. 7 for example. Note that, in the modified example described hereinafter, structures that are the same as those of the embodiment are denoted by the same reference numerals, and description thereof is omitted as appropriate.

### (Modified Example)

As illustrated in Fig. 7, at a vehicle 100 provided with the vehicle side portion structure relating to the modified example, five of the fasten-together bolts 62 are provided. Specifically, at the corner portions at the vehicle rear side of a battery frame 102, the through-holes 64A through which the fasten-together bolts 62 are inserted are formed in a lower wall portion 106 that is positioned at the vehicle lower side of a battery side frame 104. Further, the through-holes 66A through which the fasten-together bolts 62 are inserted are formed in an upper wall portion 108 that is positioned at the vehicle upper side of the battery side frame 104.

A battery case 110 has an upper case 112 and a lower case 114. The through-holes 24A are formed in the vehicle rear side corner portions of an upper flange portion 116 of the upper case 112. Further, the through-holes 26A are formed in the vehicle rear side corner portions of a lower flange portion 118 of the lower case 114. Namely, the fasten-together bolts 62 that are disposed the furthest toward the vehicle rear side are disposed at the vehicle rear side corner portions of the battery frame 102 and the battery case 110. The rigidity of the rear end portion of the battery frame 102 is thereby improved. Note that fasten-together bolts may be disposed at the vehicle front side corner portions of the battery frame. Further, transverse bolts may be disposed at the corner portions of the battery frame.

In the present modified example, the third fasten-together bolt 62 from the vehicle front side is provided at a position corresponding to an unillustrated pillar. Note that, in the same way as in the above-described embodiment, a transverse bolt may be disposed at a position corresponding to a pillar.

## Claims

1. A vehicle side portion structure, comprising:
a pillar (32) extending in a vehicle vertical direction at a vehicle side portion;
a rocker (34) extending in a vehicle longitudinal direction at a lower side of the pillar and connected to the pillar, and structured to include a main body portion (56) and an extending portion (58) that extends toward a vehicle transverse direction inner side from an upper portion of the main body portion (56); and
a frame member (28) disposed at a vehicle transverse direction inner side of the main body portion (56) and a vehicle lower side of the extending portion (58).

2. The vehicle side portion structure of claim 1, wherein:
the frame member is a battery side frame (28) extending in the vehicle longitudinal direction, and
the extending portion (58) extends further toward a vehicle transverse direction inner side than a vehicle transverse direction center of the battery side frame (28).

3. The vehicle side portion structure of claim 1, wherein the rocker (34) is formed as a closed cross-sectional structure by the main body portion (56) and the extending portion (58).

4. The vehicle side portion structure of claim 2, wherein the battery side frame (28) is fixed to the vehicle lower side of the extending portion (58).

5. The vehicle side portion structure of claim 2, wherein the battery side frame (28) is fixed to the vehicle transverse direction inner side of the main body portion (56).

6. The vehicle side portion structure of claim 2, wherein the battery side frame (28) is fixed to a battery case (16) that is disposed at a vehicle lower portion and houses a battery (18).

7. The vehicle side portion structure of claim 6, wherein the battery case (18) has a flange portion (26) extending in a vehicle transverse direction, and is fixed to a vehicle lower side of the battery side frame (28) at the flange portion.

8. The vehicle side portion structure of claim 7, wherein the extending portion (58), the battery side frame (28) and the flange portion (26) are fastened together in the vehicle vertical direction by first fasteners (62) that pass through the battery side frame (28).

9. The vehicle side portion structure of claim 8, wherein an inner wall portion (48), which is positioned at the vehicle transverse direction inner side of the main body portion (56), is fastened in the vehicle transverse direction by second fasteners (70) to an outer wall portion (40) that is positioned at a vehicle transverse direction outer side of the battery side frame (28).

10. The vehicle side portion structure of claim 9, wherein a plurality of the first fasteners (62) and the second fasteners (70) are disposed alternately at a uniform interval in the vehicle longitudinal direction.

11. The vehicle side portion structure of claim 9, wherein a lower wall portion, which is positioned at a vehicle lower side, of the battery side frame (28) is fastened to the flange portion (26) by third fasteners (74) that are respectively disposed at a uniform interval between the first fasteners (62) and the second fasteners (70).

12. The vehicle side portion structure of claim 4 or claim 5, wherein the battery side frame (28) is fixed to the rocker (34) at a position corresponding to the pillar (32) in the vehicle longitudinal direction.

13. The vehicle side portion structure of claim 6, further comprising a floor cross member (78) extending in a vehicle transverse direction at a vehicle upper side of the battery case (16),
wherein the floor cross member (78) is disposed at a position overlapping with at least a portion of the extending portion (58), as seen from a vehicle lateral side.

14. The vehicle side portion structure of claim 13, wherein the floor cross member (78) is fixed to the extending portion (58).

15. The vehicle side portion structure of claim 13, wherein the floor cross member (78) is disposed at a position corresponding to the pillar (32) in the vehicle longitudinal direction.

16. The vehicle side portion structure of claim 13, further comprising a bracket (80) that connects a vehicle transverse direction inner side surface of the pillar (32), a vehicle upper side surface of a vehicle transverse direction end portion of the floor cross member (78), and a vehicle upper side surface of the battery case (16).
